# FASCICULE DE BREVET EUROPEEN

(11) **EP 2 715 839 B1**
(45) Date de publication et mention de la délivrance du brevet: **23.03.2016**
(21) Numéro de dépôt: 12731049.8
(22) Date de dépôt: 23.05.2012
(51) Int. Cl.: H01M 4/36, H01M 4/60, H01M 4/04, H01M 4/134, H01M 4/66, H01M 4/1395, H01M 10/052, H01M 4/38

(54) **ANODES DE BATTERIES Li-ION**
ANODEN FÜR LI-IONEN-BATTERIEN
ANODES OF LI-ION BATTERIES

(30) Priorité: 24.05.2011 FR 1154525
(43) Date de publication de la demande: 09.04.2014
(73) Titulaire: Ecole Polytechnique, 91120 Palaiseau (FR); Centre National de la Recherche Scientifique, 75016 Paris (FR); Centre de Recherche en Technologie des Semi-Conducteurs pour L'Energetique, 16027 Alger (DZ)
(72) Inventeur: ROSSO, Michel, 91460 Marcoussis (FR); TOUAHIR, Larbi, 59170 Croix (FR); CHERIET, Abdelhak, Eleulma-Setif 19000 (DZ); SOLOMON, Ionel, 92100 Boulogne-billancourt (FR); CHAZALVIEL, Jean-Noël, 06600 Antibes (FR); OZANAM, François, 92310 Leuville-sur-orge (FR); GABOUZE, Noureddine, Alger 16000 (DZ)
(74) Mandataire: Gevers & Orès
(86) Numéro de dépôt international: PCT/FR2012/051161
(87) Numéro de publication internationale: WO 2012/160315

(56) Documents cités:
- US-A1- 2007 128 516
- FIDELIS A ET AL: "Fully methylated, atomically flat (111) silicon surface", 1 janvier 2000 (2000-01-01), SURFACE SCIENCE 20000101 ELSEVIER SCIENCE B.V., VOL. 444, NR. 1, PAGE(S) L7-L10, XP002665480, le document en entier
- SOLOMON ET AL: "Selective low-power plasma decomposition of silane-methane mixtures for the preparation of methylated amorphous silicon", PHYSICAL REVIEW B, vol. 38, no. 14, 15 novembre 1988 (1988-11-15), pages 9895-9901, XP002665481, cité dans la demande

## Description

La présente invention concerne l'utilisation d'un alliage de silicium amorphe méthylé comme matière active d'une anode de batterie Li-ion. Elle concerne les électrodes négatives (anodes) fabriquées à l'aide de ce matériau, ainsi que les accumulateurs au lithium dont l'anode comprend ce matériau. L'invention a également pour objet un procédé de fabrication de ces électrodes.

Le matériau de l'invention se distingue de ceux déjà connus pour la fabrication d'anodes d'accumulateurs lithium-ion par sa forte capacité de charge/décharge, sa forte efficacité coulombienne, l'amélioration des propriétés de cyclage (un plus grand nombre de cycles est possible), sa forte vitesse de charge-décharge, sa facilité de mise en oeuvre.

La forte croissance de l'utilisation d'appareils électroniques portables nécessite de disposer d'accumulateurs offrant une capacité énergétique de plus en plus élevée. En particulier sont concernés les appareils de communication portables, les appareils électroniques portables, notamment les ordinateurs. Les véhicules électriques ou hybrides sont une autre application importante pour les accumulateurs de forte capacité.

Ces appareils font largement appel à l'utilisation de batteries au lithium-ion. Toutefois, les performances actuelles de ce type de batteries sont insuffisantes. L'anode est un composant important d'une batterie au lithium. Le rôle de l'anode consiste à intercaler ou incorporer du lithium pendant le cycle de charge de la batterie, et à relâcher le lithium lorsque la batterie se décharge. Dans de nombreux cas, l'incorporation et le relâchement du lithium peuvent entraîner des changements de volume qui provoquent des perturbations physiques de la matière électrochimiquement active de l'anode et ainsi compromettent son intégrité. Cette perte de l'intégrité entraîne une baisse de performance de la batterie avec la répétition des cycles de charge et de décharge. Ainsi, on s'attend à ce que la stabilité et les performances de la batterie soient améliorées si cette dégradation des matériaux d'électrode peut être évitée ou réduite.

Les accumulateurs lithium-ion que l'on trouve actuellement sur le marché comprennent une anode à base de carbone et une cathode à base de LiNiO₂ dopé, de LiCoO₂, de LiMnO₂ ou de LiMn₂O₄ dopé. Ces accumulateurs présentent des énergies massique et volumique limitées. L'anode à base de carbone de ces batteries a une durée de vie assez longue, mais une capacité réversible limitée. La capacité réversible est définie comme étant la quantité d'électricité générée au cours de la décharge par la désinsertion réversible des atomes de lithium hors de l'anode. Ainsi l'énergie délivrée par un accumulateur au lithium est limitée par son anode.

Le silicium est connu depuis longtemps comme un matériau très prometteur pour les batteries Li-ion du fait de sa capacité à insérer de grandes quantités de lithium, capacité douze fois supérieure à celle du graphite utilisé dans les batteries commerciales. Son utilisation a été fortement limitée jusqu'à présent par le gonflement très important du matériau à l'état de charge (environ 300%). Des solutions à ce problème de gonflement ont été proposées. Elles nécessitent l'utilisation de silicium sous forme nanométrique (couches d'épaisseur nanométrique, poudre de grains de taille nanométrique, nanofils ou nanotubes).

Si ces matériaux présentent une capacité massique théorique élevée (de 2000 à 4000 mAh/g), leur tenue en cyclage reste très mauvaise, car les très fortes variations volumiques provoquées par les cycles d'insertion/ désinsertion du lithium nuisent à l'intégrité de ces matériaux fortement divisés.

Par ailleurs l'alliage stoechiométrique SiC n'insère pas de lithium. En revanche, l'utilisation de carbone et de silicium en mélange hétérogène (poudre de Si entourée de carbone, liants etc...) permet d'améliorer les propriétés de cyclage du silicium, mais sans complètement s'affranchir des problèmes liés au gonflement dû au lithium.

Le silicium amorphe hydrogéné (a-Si:H) est un matériau dans lequel les atomes de silicium adoptent un environnement local tétraédrique (correspondant à un état d'hybridation dit sp³), comme dans le silicium cristallin, mais dont l'arrangement ne présente pas d'ordre à longue distance, contrairement au silicium cristallin. Le matériau, qui peut être avantageusement obtenu sous forme de couche mince par décomposition de silane (SiH₄) assistée par plasma (selon une technique de dépôt chimique en phase vapeur assisté par plasma connue sous le nom de PECVD) contient une quantité importante d'hydrogène, dont une partie est mobile au sein du matériau et une partie engagée dans des liaisons avec des atomes de silicium. La présence d'hydrogène dans le matériau permet de lui donner des propriétés de semi-conducteur, en limitant la densité des états électroniques dans sa bande interdite, ce qui permet en particulier de le doper et de lui conférer une conduction par les électrons de sa bande de conduction (matériau de type n) ou par ceux de sa bande de valence (matériau de type p). Le silicium amorphe hydrogéné est un matériau dont l'utilisation en couches minces a été envisagée pour les batteries au lithium. Bien qu'il ne présente pas l'inconvénient de devoir subir une transition de l'état cristallin vers l'état amorphe lors du premier cycle de charge/décharge, le matériau s'avère posséder des performances, en termes de cyclage, limitées à une vingtaine de cycles (voir par exemple H. Jung et coll., Journal of Power Sources 115 (2003) 346-351).

W.J. Zhang, J. Power Sources 196 (2011) 13-24 propose une revue des études sur les propriétés électrochimiques des nouveaux matériaux pour anode de batteries Li-ion.

Plusieurs auteurs ont proposé des composites Si-C stables ou pseudo-stables en cyclage et présentant des capacités massiques de 500 à 900 mAh/g.

Un composite est défini comme un matériau formé de plusieurs constituants pour obtenir des propriétés mécaniques particulières. Toutefois, la synthèse des composites s'accompagne de la formation de carbure de silicium qui nuit aux performances électrochimiques de ces composites.

Notamment D. Larcher et al., Solid State lonics 122, 71 (1999) ; D. Larcher et al. Electrochim. Acta 44, 4069 (1999) ont décrit des composites SiC préparés par pyrolyse sous argon de mélanges brai/polysilane. Ce procédé conduit à des nanoparticules riches en Si incluses dans une matrice de carbone désordonné.

D'autres composites ont été décrits par J. Yang et al., Electrochem. Solid State Lett. 6, 154 (2003) ; J. Saint et al., Adv. Funct. Mater. 17,1765 (2007); FR2885734 ; EP1722429. Il s'agit de composites SiC obtenus par pyrolyse à 900°C de mélanges intimes Si/PVC sous N₂. La capacité réversible est d'environ 1000mAh/g pendant 20 cycles. La capacité irréversible est d'environ 1/3 de la capacité réversible. Les auteurs ont observé que l'enrobage carboné exerce une force de compression sur les inclusions de silicium, qui est nécessaire pour une bonne cyclabilité. Un broyage, même modéré, du matériau détruit cet effet.

WO2007/053704A2 décrit un nouveau matériau pour électrode négative de batterie au lithium. Celui-ci est constitué d'un matériau actif soumis à des variations de volume et d'un matériau tampon à base de métal ou d'oxyde métallique améliorant la cyclabilité. Mais comme avec les composites, le gonflement du matériau actif nécessite un agencement exigeant entre le matériau actif et le matériau tampon, et cet agencement s'avère difficile à réaliser pour une électrode de forte capacité.

Par ailleurs, A.M. Wilson, J.R. Dahn, J. Electrochem. Soc. 142, 326 (1995) ont décrit la préparation de nanoparticules de silicium maintenues dans une matrice de graphite, par CVD de mélange silane/méthane. Toutefois, on a constaté un manque de reproductibilité de ce procédé et le coût de ces matériaux est très élevé.

JP2005-235397 décrit des anodes pour batterie lithium-ion à base de silicium amorphe et d'au moins une impureté choisie parmi le carbone, l'azote, l'oxygène, l'argon et le fluor. On constate toutefois que les essais de cyclabilité se limitent à un très faible nombre de cycles de charge/décharge (cinq) et que pour une concentration de carbone dépassant 2% les inventeurs n'ont même pas réussi à atteindre ce chiffre. La cyclabilité des matériaux ainsi décrits apparaît donc très faible. En ce qui concerne les matériaux carbonés, on peut relever que les conditions de préparation par PECVD font appel à une puissance élevée pour l'excitation du plasma, ce qui entraîne vraisemblablement la formation de carbone graphitique.

FIDELIS A ET AL, SURFACE SCIENCE 20000101, VOL. 444, NR. 1, L7-L10 décrit un procédé de méthylation d'un substrat en silicium (cristallin), dans lequel on fait passer un courant anodique dans ledit substrat dans un solvant comprenant de l'éther diéthylique + 3M CH3MgI.

US 2007/128516 A décrit un matériau actif pour anode comprenant des particules de silicium recouvertes d'un oxyde d'alkyle lié soit directement à la surface du silicium soit par l'intermédiaire d'un groupe siloxane.

L'invention a eu pour objectif de résoudre les problèmes de l'art antérieur, à savoir, la préparation d'un matériau d'anode pour batterie Li-ion d'une forte capacité massique de charge/décharge et d'une efficacité élevée, de bonnes propriétés de cyclage, y compris pour des fortes vitesses de charge/décharge. En outre, on a cherché à mettre au point un matériau dont la préparation soit simple à mettre en oeuvre, suivant un procédé reproductible et fiable.

L'invention repose sur l'utilisation de silicium amorphe méthylé comme matière active pour la fabrication d'une électrode. En particulier, elle repose sur la fabrication d'un alliage à base de silicium amorphe méthylé, qui est utilisé comme matière active pour la fabrication d'une anode de batterie Li-ion. L'alliage est déposé par PECVD (décomposition chimique en phase vapeur assistée par plasma) sur un support. L'utilisation de couches minces (par exemple couche de 70 nm déposée sur acier inoxydable) permet de bénéficier d'une forte capacité massique de charge/décharge et d'une forte efficacité par rapport aux systèmes connus actuellement. Une telle anode, facile à mettre en oeuvre, permet d'améliorer les propriétés de cyclage (un grand nombre de cycles peut être atteint) par rapport aux systèmes utilisant une anode en composite silicium/carbone, y compris pour des fortes vitesses de charge/décharge.

De façon plus détaillée, l'invention se rapporte à une anode pour batterie Li-ion comprenant au moins un substrat (S) supportant sur une partie au moins de sa surface un revêtement comportant au moins un matériau à base de silicium amorphe méthylé (SM). De préférence le revêtement à base de silicium amorphe méthylé est sous forme d'une couche mince continue.

Le substrat (S) peut être constitué de tout matériau conducteur dans lequel les ions lithium ne s'insèrent pas ou peu, adapté à supporter la ou les couches supérieures, notamment la couche (SM). La propriété d'un matériau de ne pas insérer le lithium peut être évaluée de façon bien connue de l'homme du métier en faisant des tests de cyclage au cours desquels on vérifie que la capacité réversible du substrat est négligeable et que celui-ci se passive au bout d'un ou de quelques cycles. Le substrat (S) peut se présenter sous forme d'un support massif, nu ou portant une couche, un film, ou un revêtement adapté. Avantageusement, le substrat (S) comporte au moins une couche à base d'un métal ou d'un alliage de métaux choisis parmi : le cuivre, le nickel, le fer, l'acier inoxydable (INOX), le molybdène ou le tungstène. Notamment le substrat peut être entièrement métallique, par exemple il peut être une feuille métallique. Le substrat peut se présenter sous la forme d'une surface plane et continue. Il peut aussi présenter toute forme adaptée à une utilisation comme électrode, notamment il peut présenter une forme cylindrique. Avantageusement, le substrat présente une surface spécifique élevée. Un tel substrat est avantageusement choisi parmi ceux présentant une forte rugosité de surface, tels que ceux décrits notamment dans EP-2 031 082, qui propose un substrat métallique texturé cristallographiquement. De préférence, le substrat présente une surface spécifique supérieure à sa surface géométrique, de préférence supérieure ou égale à 2 fois sa surface géométrique, avantageusement supérieure ou égale à 5 fois sa surface géométrique, mieux encore supérieure ou égale à 10 fois sa surface géométrique. En effet, à aire équivalente, la présence d'un substrat texturé, par rapport à un matériau lisse, permet d'augmenter la quantité de matériau (SM) déposé sur le substrat et ainsi d'augmenter sa capacité.

Le substrat (S) comprend avantageusement une couche de film métallique et il peut comporter une ou plusieurs couches supportant le film métallique. Le matériau (SM) est déposé directement sur le film métallique ou sur une couche intermédiaire entre le film métallique et la couche (SM). Avantageusement, le matériau (SM) est déposé directement sur la couche à base de métal ou d'alliage de métaux, en particulier sur le film métallique.

Selon une variante préférée de l'invention, la couche de silicium amorphe méthylé est déposée sous forme d'une couche mince continue. Pour une électrode de batterie, la géométrie de couches minces permet de mettre en contact direct la matière active de l'électrode et le collecteur de charges. Cela évite les complications liées à la mise en forme d'une électrode sous forme de composite réunissant matière active, matière collectant les charges et liant assurant la cohésion de l'électrode ; à l'inverse, il est moins facile de réaliser dans cette géométrie une électrode de grande capacité volumique. Dans les modes de réalisation préférés décrivant l'invention, cette géométrie a été privilégiée car elle permet de mettre en valeur les caractéristiques intrinsèques du matériau constituant la matière active.

La portée de l'invention ne se réduit toutefois pas à ce mode de réalisation particulier. Elle inclut également l'utilisation du silicium amorphe méthylé sous d'autres formes telles que : particules de silicium amorphe méthylé de petite taille dispersées dans une matrice pour former un composite, matrice poreuse ou non poreuse à base de silicium amorphe méthylé incorporant par exemple des particules nanométriques d'autres matériaux comme le silicium, nanostructures à base de silicium amorphe méthylé déposées sur un collecteur de courant, ou sous forme de revêtement à la surface d'un collecteur de courant possédant une grande surface développée. De telles formes d'électrodes à base de silicium amorphe méthylé peuvent s'avérer avantageuses pour avoir une électrode possédant une grande capacité et supportant sans dégradation un grand nombre de cycles de charge et décharge dans ces géométries constituant d'autres modes de réalisation.

Le silicium amorphe méthylé (a-Si_{1-*x*}(CH₃)*ₓ*:H) est un matériau apparenté au silicium amorphe hydrogéné en ce sens que les atomes de silicium conservent un environnement tétraédrique local et que le matériau ne présente pas d'ordre à longue distance. Ce matériau est un alliage de silicium et de carbone particulier, dans lequel le carbone est incorporé essentiellement sous la forme de groupements méthyles CH₃. Cela signifie que: i) les atomes de carbone au sein du matériau adoptent eux aussi un environnement tétraédrique correspondant à une hybridation sp³ ; ii) les groupes méthyles brisent la continuité du réseau amorphe en ce sens qu'ils ne peuvent pas assurer de rôle pontant entre deux atomes de silicium (ou entre un atome de silicium et un atome de carbone).

On entend par " couche, ou matériau, à base de silicium amorphe méthylé ", au sens de la présente invention, une couche de matériau, ou le matériau lui-même, amorphe comprenant majoritairement du silicium amorphe méthylé, notamment de 50 à 100 % de silicium amorphe méthylé en fraction massique. Avantageusement la couche ou le matériau (SM) est constitué de silicium amorphe méthylé, éventuellement dopé à hauteur de 3% atomique au maximum d'impuretés.

La couche (SM) peut être dopée par l'inclusion d'impuretés, par exemple par l'inclusion de dopants usuels du silicium tels que des atomes de phosphore ou de bore, d'arsenic, d'antimoine, d'aluminium, de gallium, d'indium, de bismuth. Ce dopage permet d'augmenter la conductivité de la couche (SM). La quantité de ces impuretés peut être comprise par exemple entre 0,001 et 3% atomique dans la couche (SM). Ces impuretés peuvent être introduites par implantation ionique, par diffusion ou lors d'un procédé PECVD sous forme d'un gaz ajouté au mélange réactionnel. Il peut s'agir par exemple de diborane pour le bore ou de phosphine pour le phosphore.

Un avantage du silicium amorphe méthylé obtenu en régime « basse puissance » est qu'il conserve de bonnes propriétés optiques et semi-conductrices. Cela lui permet d'être dopé pour obtenir un matériau de type n ou p, comme dans le cas du silicium amorphe a-Si:H. Par exemple, pour conférer au silicium amorphe méthylé un caractère de type n, on peut ajouter au mélange gazeux une faible quantité de phosphine PH₃. Ce dopage permet de conférer au matériau une meilleure conductivité électronique. Pour l'utilisation comme matériau d'électrode au sein d'une batterie, ceci est avantageux lorsqu'on utilise le silicium amorphe méthylé sous la forme de couche mince ou de revêtement sur un collecteur de courant. Ceci évite en particulier des résistances série indésirables au sein d'une batterie. Par ailleurs, le lithium joue aussi le rôle d'un dopant de type n : le dopage préalable, par exemple par du phosphore, permet d'assurer ce rôle indépendamment de la lithiation du matériau et stabilise ses propriétés au cours des cycles de charge/décharge.

On entend par " amorphe ", au sens de la présente invention, une forme non cristalline du silicium, c'est-à-dire que le matériau ne présente pas d'ordre à longue distance.

On entend par " revêtement continu ", au sens de la présente invention, un revêtement se présentant sous la forme d'un film recouvrant entièrement une partie au moins du substrat.

Le matériau composant la couche de silicium amorphe méthylé peut être décrit par la formule chimique (I) :

a-Si₁₋ₓ(CH₃)ₓ : H avec 0 < x ≤ 0,4 (I)

Selon une variante préférée de l'invention, dans la formule (I) 0,1 ≤ x ≤ 0,25.

L'utilisation du silicium amorphe méthylé comme matériau d'anode pour les batteries au lithium-ion présente des avantages substantiels : i) l'utilisation d'un matériau à base majoritairement de silicium permet de bénéficier d'une capacité réversible de charge/décharge proche de celle du silicium ; ii) la présence de groupements méthyles diminue la coordinence moyenne du réseau tridimensionnel formé par les atomes de silicium, ce qui assouplit le matériau, lui permet de mieux supporter les variations de volume associées aux charges et décharges et permet d'obtenir une meilleure cyclabilité de la batterie. La composition du silicium amorphe méthylé a-Si₁₋ₓ(CH₃)*ₓ*:H doit donc être choisie avec un contenu en groupements méthyles *x* suffisamment faible pour optimiser la capacité de charge/décharge de l'électrode, mais suffisamment élevé pour conférer au matériau une élasticité suffisante. La présence de groupements CH₂ formant des unités Si-CH₂-Si réticulant le réseau des atomes de silicium contribue à rigidifier le matériau et doit être évitée. De même, la présence d'atomes de carbone dans un état d'hybridation sp² tend à former au sein du matériau de petits amas carbonés qui nuisent à la capacité de l'électrode, ce qui doit également être évité. Dans la pratique, les modes de réalisation des matériaux permettent difficilement d'obtenir du silicium amorphe méthylé a-Si₁₋ₓ(CH₃)*ₓ*:H pour une valeur arbitraire du contenu en groupements méthyles x. Il est donc important de disposer de techniques de caractérisation permettant de préciser la nature d'un alliage amorphe hydrogéné de silicium et de carbone et de déterminer s'il peut être considéré comme un matériau de type silicium amorphe méthylé.

Dans les publications de l'art antérieur, les auteurs ont désigné indifféremment par la formule a-Si₁₋ₓCₓ : H des matériaux de type alliage amorphe ou des matériaux comportant des inclusions graphitiques. En réalité, lorsque le carbone et le silicium forment une seule phase homogène dans laquelle le carbone est présent sous forme sp³, la formule suivante (II) est plus représentative de ce matériau :

a-Si₁₋ₓ(CH₃)_{x-y}(CH₂)_{y} : H avec 0 < x ≤ 0,4 et y ≤ x (II)

Idéalement, le silicium amorphe méthylé correspond à un matériau décrit par la formule (II) dans le cas où y=0, pour lequel on retrouve la formule (I). Au sens du présent document, on appellera silicium amorphe méthylé un matériau constituant une phase homogène pour lequel : i) la présence d'atomes de carbone dans un état d'hybridation sp² est suffisamment faible, de manière à pouvoir décrire le matériau en bonne approximation par la formule (II) ; ii) une part importante du carbone se trouve incorporé sous forme de groupes méthyles, de manière à ce que dans la formule (II) décrivant le matériau en bonne approximation on ait y suffisamment petit devant x. Le sens des expressions « suffisamment faible » et « suffisamment petit » dans les conditions précédentes va être précisé par les deux paragraphes suivants.

La spectroscopie infrarouge permet de déterminer simplement la nature des différents alliages a-Si_{1-*x*}C*ₓ*:H. En général, les vibrations d'élongation des liaisons C-H entre 2800 et 3100 cm⁻¹ permettent de préciser l'état d'hybridation de l'atome de carbone et la nature des groupements hydrocarbonés présents. Pour un atome de carbone dans un état d'hybridation sp³, la contribution des groupes CH₃ se présente sous la forme de deux pics centrés au voisinage de 2885 et 2950 cm⁻¹, et celle des groupes CH₂ sous la forme de deux pics au voisinage de 2860 et 2920 cm⁻¹. La position exacte de ces pics peut dépendre légèrement de la composition du matériau et leur largeur est telle qu'ils se recouvrent partiellement les uns les autres. Mais les procédures d'ajustement ou de déconvolution de spectres familières à l'homme de l'art permettent de mettre en évidence ces différentes contributions. La région correspondant aux vibrations de déformation permet encore plus nettement d'isoler les contributions respectives des groupes CH₂ et CH₃. Une contribution très caractéristique des groupes CH₃ se trouve sous la forme d'un pic centré entre 1235 et 1250 cm⁻¹. De même, une contribution caractéristique des groupements CH₂ se trouve sous la forme d'un pic centré au voisinage de 1450 cm⁻¹. Entre ces deux pics caractéristiques, on isole deux autres pics associés aux groupes CH₃, centrés l'un entre 1340 et 1360 cm⁻¹ et l'autre à environ 1400 cm⁻¹ ; ces pics sont toutefois moins intenses que celui centré entre 1235 et 1250 cm⁻¹. Pour un atome de carbone dans un état d'hybridation sp², les vibrations d'élongation des liaisons C-H sont caractéristiques et se situent entre 3000 et 3100 cm⁻¹. Un groupement méthylé Si-(CH₃) se différencie aussi d'un groupement pontant Si-(CH₂)-Si par le spectre des vibrations d'élongation Si-C : pic unique vers 770 cm⁻¹ pour un groupement méthylé, pic supplémentaire vers 1100 cm⁻¹ pour un groupement pontant.

Dans le présent document, on désignera par silicium amorphe méthylé un alliage silicium-carbone au sein duquel une part importante du carbone est incorporée sous la forme de groupements méthyles. On considérera qu'une part importante du carbone est sous forme de groupements méthyles lorsque dans le spectre infrarouge du matériau, enregistré dans des conditions où la résolution instrumentale n'affecte pas la largeur des pics du spectre infrarouge, i) le pic associé à la vibration de déformation symétrique du groupe méthyle (dont le maximum est situé entre 1230 et 1260 cm⁻¹) a une hauteur supérieure aux trois quarts de celle de la bande d'absorption associée aux vibrations d'élongation des liaisons C-H entre 2800 et 3100 cm⁻¹ ; ii) on ne distingue pas d'absorption associée aux vibrations d'élongation des liaisons C-H entre 3000 et 3100 cm⁻¹ dont l'amplitude excède le quart de la hauteur de la bande d'absorption associée aux vibrations d'élongation des liaisons C-H entre 2800 et 3000 cm⁻¹.

Au contraire des matériaux de l'invention, les matériaux composites Si/C et les matériaux SiC comportant une phase graphitique importante sont opaques.

On désigne par α le quotient de la concentration d'atomes de carbone [C], rapporté à la somme des concentrations atomiques [C] et [Si] dans le matériau (SM) : $α = \frac{\left[C\right]}{\left[C\right] + \left[Si\right]}$

De préférence, dans le matériau de l'invention : $5 % \leq α \leq 40 % ,$

Avantageusement : $10 % \leq α \leq 30 % .$

Le revêtement peut être constitué d'un empilement de couches de silicium amorphe méthylé (SM), c'est-à-dire d'une succession de couches identiques ou différentes alternant les unes avec les autres, notamment des couches de matériau comportant des proportions distinctes de silicium et de carbone. Un tel empilement peut être répété jusqu'à une dizaine de fois. Par exemple, la couche (SM) peut comprendre de 2 à 20 couches, de préférence de 6 à 12 couches.

Pour l'analyse de l'alliage obtenu, on peut utiliser toute méthode connue de l'homme du métier pour la mesure de la quantité des différents éléments dans l'alliage, comme la spectroscopie de masse d'ions secondaires (SIMS) ou la spectroscopie de photoélectrons ; les propriétés optiques peuvent être mesurées par spectroscopie en transmission ou en réflexion, par ellipsométrie spectroscopique, par spectroscopie à déflexion photothermique ; les propriétés électroniques peuvent être mesurées par étude du courant limité par la charge d'espace.

La couche continue peut couvrir l'ensemble de la zone du substrat utilisée comme anode. La couche continue peut posséder, en tout point de la surface de revêtement, une épaisseur supérieure à 10 nm.

Avantageusement, cette épaisseur est sensiblement constante sur toute la surface du substrat. De préférence, la couche de silicium amorphe méthylé (SM) ou la superposition de couches de silicium amorphe méthylé, présente une épaisseur supérieure ou égale à 30 nm, avantageusement supérieure ou égale à 100 nm, encore mieux, supérieure ou égale à 500 nm. Elle peut présenter une épaisseur allant jusqu'à 10 µm.

Par rapport aux matériaux de l'art antérieur, on constate :

Le matériau (SM) de l'invention est moins conducteur que Si, et donc a priori moins favorable pour une utilisation comme matériau d'électrode, en particulier d'anode. Toutefois, la possibilité de doper le matériau atténue cet inconvénient qui n'a en outre plus de conséquence pratique après la lithiation du matériau qui augmente encore sensiblement sa conductivité, c'est-à-dire après une période de formage d'un ou plusieurs cycles de charge/décharge (suivant les conditions de charge/décharge). Par ailleurs, comme le silicium présente une cyclabilité insuffisante qui limite son utilisation comme matériau d'électrode dans une batterie Li-ion, la cyclabilité du matériau (SM), très supérieure à celle de Si, et le maintien d'une capacité d'insertion du lithium très supérieure à l'état de l'art constituent des avantages décisifs pour une application de ce type.

Le dépôt de la couche à base de silicium amorphe méthylé (SM) sur le substrat (S) peut être réalisé par toute méthode connue de l'homme du métier dès lors qu'elle permet d'obtenir un alliage amorphe de silicium et de carbone présentant avantageusement les caractéristiques énoncées ci-dessus. On peut utiliser par exemple la méthode par PECVD (dépôt chimique en phase vapeur assisté par plasma) telle que décrite dans les documents Solomon et al. (Phys. Rev. B., 1988, 38, 9895-9901 ; Phys. Rev. B., 1988, 38, 13263-13270).

Le silicium amorphe méthylé est avantageusement obtenu sous forme de dépôt en couche mince par décomposition d'un mélange de silane (SiH₄) et de méthane (CH₄) assistée par plasma dans un régime basse puissance. Ce régime « basse puissance » correspond à des conditions d'excitation du plasma suffisamment douces pour que seules les molécules de silane soient décomposées directement par le plasma ; le carbone incorporé dans la couche mince provient alors de groupes méthyles formés par réaction des molécules de méthane avec les espèces actives issues de la décomposition des molécules de silane dans le plasma (voir I. Solomon et coll., Physical Review B 38 (1988) 9895-9901). Ce mode d'incorporation « chimique » présente l'avantage de ne pas dépendre du détail de la géométrie de la machine de dépôt. De façon logique, compte tenu de ce mode d'excitation indirect, le rapport du nombre d'atomes de carbone au nombre d'atomes de silicium dans la couche mince est sensiblement inférieur au rapport de la concentration en méthane à la concentration en silane au sein du mélange gazeux. Dans ce mode d'obtention, il est possible d'obtenir des matériaux de composition a-Si₁₋ₓ(CH₃)*ₓ*:H correspondant à des valeurs de *x* comprises entre 0 et 0,2. Au-delà de cette valeur maximale, le régime basse puissance permet d'obtenir des matériaux présentant des rapports du nombre d'atomes de carbone au nombre d'atomes de silicium jusqu'à des valeurs approchant 0,4, mais au sein desquels une proportion mesurable des atomes de carbone ne sont plus incorporés sous forme de groupements méthyles mais se trouvent en position pontante entre deux atomes de silicium (voir I. Solomon et coll., Physical Review B 38 (1988) 13263-13270). Toutefois, ce matériau demeure du silicium amorphe méthylé au sens du présent document. De même, un matériau obtenu hors du régime « basse puissance » dans des conditions appropriées peut lui aussi être considéré comme du silicium amorphe méthylé au sens du présent document.

L'invention a encore pour objet un procédé de fabrication d'une électrode telle que décrite ci-dessus comportant au moins les étapes suivantes :
(i) fourniture d'un substrat en un matériau conducteur dans lequel les ions lithium ne s'insèrent pas ou peu,
(ii) dépôt de la couche à base de silicium amorphe méthylé sur le substrat par PECVD à basse puissance.

En particulier un matériau répondant aux caractéristiques attendues (caractère amorphe, alliage) est obtenu en utilisant le procédé par PECVD à basse puissance. Contrairement au procédé par PECVD à forte puissance, qui est par exemple utilisé dans JP2005-235397, le procédé utilisé dans la présente invention permet d'éviter la formation de phases graphitiques qui opacifient le matériau dans la partie rouge ou proche infrarouge du spectre lumineux et peuvent donner naissance à une absorption vibrationnelle dans la région comprise entre 3000 et 3100 cm⁻¹.

On entend par « PECVD à basse puissance » au sens de la présente invention une PECVD à une puissance telle qu'il n'y a pas ou pratiquement pas de décomposition directe du méthane sous l'effet de l'excitation électromagnétique au sein du plasma.

Comme cela a été déjà mentionné, s'écarter du régime basse puissance n'empêche pas nécessairement d'obtenir du silicium amorphe méthylé. De la même façon, on peut obtenir du silicium amorphe méthylé par d'autres méthodes connues par l'homme de l'art. On peut par exemple obtenir le matériau de l'invention par PECVD à partir d'un mélange gazeux de silane avec de l'éthane, de l'acétylène ou de l'éthylène (voir par exemple B. Akoaglu et coll., Optical Materials 30 (2008) 1257-1267) ; on peut également obtenir le matériau de l'invention par PECVD à partir de méthylsilane CH₃SiH₃ (voir par exemple O. Joubert et coll., Journal of Vacuum Science and Technology B 18 (2000) 793-798) ou d'un mélange de ce gaz avec le silane. Quelle que soit la méthode choisie, il est avantageux de choisir les conditions de dépôt et d'ajouter si nécessaire un gaz dopant au mélange précurseur de manière à conférer au matériau une conductivité suffisante, afin de limiter l'apparition au sein de l'électrode d'une résistance série de nature à diminuer sa performance dans une batterie.

La couche (SM) peut être déposée sur une partie seulement du substrat (S). Dans ce cas, le dépôt peut être fait en utilisant un masque adapté à la configuration géométrique souhaitée.

L'invention est basée sur le dépôt PECVD d'un alliage de silicium amorphe méthylé sur un substrat, l'ensemble constituant une anode de batterie Li-ion. Ce dépôt est fait grâce à des flux de silane et de méthane, et éventuellement d'un ou plusieurs gaz dopants comme par exemple la phosphine, PH₃, ou le diborane, B₂H₆.

Pour la mise en oeuvre du procédé de l'invention, on utilise de préférence les paramètres suivants :

La température du substrat est comprise entre 100°C et 350°C, de préférence entre 150 et 320 °C, avantageusement entre 180 et 280 °C.

Le seuil de puissance pour la décomposition primaire de CH₄ dans un réacteur est plus élevé que celui du silane SiH₄. La puissance utilisée dans le procédé de l'invention est choisie pour rester inférieure à ce seuil, de telle sorte qu'il n'y a pas de décomposition du méthane par le plasma.

On choisit d'appliquer une puissance inférieure à 0,3 W/cm², de préférence inférieure à 0,25 W/cm², avantageusement comprise entre 0,03 et 0,15 W/cm².

Le choix d'une puissance faible permet de conserver le carbone sous forme sp³, de l'incorporer sous forme de groupements méthyles et d'éviter la formation de phases graphitiques dans le matériau.

Le flux gazeux de silane est compris entre 0,02 et 100 cm³/mn dans les conditions standard, de préférence entre 0,1 et 50 cm³/mn dans les conditions standard, avantageusement entre 0,5 et 30 cm³/mn dans les conditions standard.

Le flux gazeux de méthane est compris entre 1 et 200 cm³/mn dans les conditions standard, de préférence entre 2 et 100 cm³/mn dans les conditions standard, avantageusement entre 4 et 50 cm³/mn dans les conditions standard.

Le rapport des flux de silane et de méthane mis en oeuvre dans le réacteur est choisi en fonction du rapport α que l'on souhaite obtenir dans la couche (SM).

La pression pendant le dépôt est comprise entre 3 et 300 mTorr, de préférence entre 10 et 200 mTorr, avantageusement entre 25 et 100 mTorr.

Le dépôt se fait de manière conforme sur une surface, même irrégulière, c'est-à-dire que le matériau se dépose efficacement en tous les points de la surface. On peut ainsi réaliser, même en couches relativement minces, des dispositifs ayant une capacité de stockage par unité de surface géométrique comparable, voire supérieure, aux dispositifs où la matière active est dispersée sous forme de grains au sein d'un composite étendu sur une feuille métallique.

Le matériau présente l'avantage d'être un alliage non stoechiométrique hydrogéné de silicium et de carbone.

Les liaisons silicium-carbone sont majoritairement de type sp³. Le matériau peut être dopé (n ou p) ou lithié avant le cyclage de la batterie comme décrit dans le document EP 2 113 960. Le matériau ainsi préparé sert de matière active anodique d'un accumulateur au lithium.

Un objet de l'invention est l'utilisation d'un matériau (SM) tel que décrit ci-dessus comme matière active pour la fabrication d'une électrode, en particulier comme matériau d'anode.

Lorsque le matériau (SM) de la présente invention est utilisé dans les batteries au lithium, elles fonctionnent par insertion et désinsertion des ions lithium, et, dans certains cas, il s'est avéré avantageux de lithier au moins partiellement le revêtement à base de matériau (SM) avant de l'intégrer dans une batterie au lithium. La lithiation peut être effectuée sur une électrode terminée par des procédés chimiques et/ou électrochimiques. On a constaté que la pré-lithiation améliore la stabilité et l'efficacité de charge/décharge des batteries.

Un autre objet de l'invention est une électrode comprenant au moins un substrat sur lequel est déposé un revêtement comportant au moins une couche à base de silicium amorphe méthylé tel que décrit ci-dessus. Plus particulièrement l'invention concerne une anode pour batterie Li-ion.

L'invention a encore pour objet un accumulateur au lithium ou batterie Li-ion comprenant une telle anode.

Une batterie Li-ion comprend outre l'anode qui vient d'être décrite, une cathode et un électrolyte.

La matière active entrant dans la constitution de la cathode peut être choisie parmi les matériaux connus de l'homme du métier, par exemple l'un ou plusieurs des matériaux suivants :
- LiNiO₂, LiCoO₂, LiMnO₂. Eventuellement Ni, Co et Mn peuvent être substitués par l'un ou par plusieurs des éléments choisis dans le groupe comprenant Mg, Mn (sauf pour LiMnO₂), Al, B, Ti, V, Si, Cr, Fe, Cu, Zn, Zr.
- les oxydes mixtes de phosphore, de lithium, et d'au moins un métal de transition de formule générale LiₓM_{z}PO₄ où x est compris entre 1 et 3 et z = 1 ou 2. Des exemples de tels oxydes sont : LiMnPO₄, LiCoPO₄, LiFePO₄, LiVPO₄F et Li₃Fe₂PO₄.
- LiMn₂O₄, Mn pouvant être substitué par l'un ou par plusieurs des éléments choisis dans le groupe comprenant Ni, Co, Mg, Al, B, Ti, V, Si, Cr, Fe, Cu, Zn, Zr.

On choisit un électrolyte connu de l'homme du métier dans le domaine des accumulateurs au lithium.

Le solvant de l'électrolyte est choisi parmi les solvants organiques tels que les carbonates linéaires, les carbonates cycliques saturés, les carbonates cycliques insaturés, les éthers cycliques, les éthers linéaires, les esters linéaires et leurs mélanges. On peut citer par exemple le carbonate d'éthylène, le carbonate de propylène, le carbonate de diméthyle et le carbonate de diéthyle. Des additifs connus de l'homme du métier, par exemple le carbonate de vinylidène, les chlorosilanes, les alcoxysilanes, peuvent être ajoutés au solvant ou au mélange de solvants utilisé.

Un sel de lithium est dissous dans ce solvant ou ce mélange de solvants. Il peut être choisi dans le groupe comprenant : l'hexafluorophosphate de lithium (LiPF₆), le tétrafluoroborate de lithium (LiBF₄), l'hexafluoroarsénate de lithium (LiAsF₆), le perchlorate de lithium (LiClO₄) le bis(oxalato)borate de lithium LiB(C₂O₄)₂ (LiBOB), le bis(trifluorométhanesulfonyl)imide de lithium LiN(CF₃SO₂)₂ (LiTFSI), le bis(perfluoroéthanesulfonyl)imide de lithium LiN(C₂F₅SO₂)₂ (LiBETI), le tris(trifluorométhanesulfonyl)méthylure de lithium LiC(CF₃SO₂)₃ (LiTFSM).

La concentration du sel de lithium dans le solvant ou le mélange de solvants de l'électrolyte est ajustée de façon connue de l'homme du métier, par exemple entre 0,1 et 1,5 M, de préférence 1 M.

La présente invention, outre sa simplicité de mise en oeuvre (un seul matériau déposé), permet de pallier les différents problèmes rencontrés, et d'obtenir de très bonnes caractéristiques (bonne capacité énergétique, bonne cyclabilité, fortes vitesses de charge-décharge), pour des épaisseurs de couches pouvant aller de l'échelle nano- à l'échelle micrométrique.

### FIGURES

Figure 1 : Spectres infrarouge typiques de diverses couches de a-Si₁₋ₓCₓ:H obtenues par dépôt PECVD en régime basse puissance
Figure 2 : Représentation schématique de la constitution de la cellule
Figure 3 : Représentation en coupe du boîtier étanche
Figure 4 : Représentation graphique de la variation du potentiel en fonction de la charge lors des deux premiers cycles de deux cellules
Figure 5 : Représentation graphique de la variation de la capacité massique d'une cellule en fonction du nombre de cycles
Figure 6 : Représentation graphique de la variation de la capacité massique réversible initiale d'une cellule mesurée en fonction de la teneur en carbone
Figure 7 : Représentation graphique de la durée de vie des cellules en fonction de la teneur en carbone
Figure 8 : Représentation graphique de la variation des capacités de deux cellules avec et sans carbone
Figure 9 : Représentation graphique de la durée de vie des cellules en fonction de l'épaisseur pour des teneurs en carbone de 0% et 20%

### PARTIE EXPERIMENTALE

### 1- Procédé de dépôt du matériau sur le substrat :

Les couches de silicium amorphe méthylé avec lesquelles les résultats présentés ont été obtenus ont été réalisées par dépôt chimique en phase vapeur assisté par plasma (PECVD) sur un substrat métallique en acier inoxydable. Pendant le dépôt, le substrat est chauffé à une température de 250°C. L'excitation électromagnétique du plasma à 13,56 MHz est couplée capacitivement à la chambre de dépôt. Juste avant le dépôt, le substrat est soumis à un plasma d'hydrogène (H₂) (pression 200 mTorr, densité de puissance 100 mW/cm²) pendant 5 minutes. Pendant le dépôt, la pression du mélange gazeux dans la chambre est comprise entre 35 et 45 mTorr, et le débit du mélange gazeux est fixé à 20 centimètres cubes par minute dans les conditions standard (20 sccm). La densité de puissance fournie au plasma est comprise entre 60 et 100 mW/cm². Ces conditions permettent de se situer dans le régime « basse puissance » décrit plus haut pour lequel la vitesse de dépôt dépend peu de la concentration en carbone du silicium amorphe méthylé obtenu. Dans nos conditions, cette vitesse de dépôt est d'environ 20 nm par minute. Le contenu en carbone x du matériau de composition a-Si₍₁₋ₓ₎(CH₃)ₓ:H dépend de la composition du mélange silane/méthane. Pour atteindre une valeur x donnée, la proportion de méthane g dans le mélange gazeux (c'est-à-dire le rapport de la pression partielle de méthane à la pression du gaz) est donnée par la formule suivante (I. Solomon et coll., Physical Review B 38 (1988) 9895-9901) : g = 11,4 x/ (1 + 9x).

### 2- Etude du matériau en spectroscopie infrarouge :

On a procédé au dépôt de diverses couches de a-Si₍₁₋ₓ₎(CH₃)ₓ:H par dépôt PECVD en régime basse puissance tel que décrit au §1 ci-dessus sur un substrat en silicium monocristallin de manière à mesurer simplement l'absorption infrarouge en transmission. La composition du mélange gazeux calculée à partir de la formule donnée au paragraphe précédent permettait de réaliser des couches de matériau avec une teneur en carbone de 10%, 20%, 30%, 37%. Un dépôt haute puissance (500 mW/cm²) a été réalisé à titre comparatif avec un mélange gazeux de composition identique à celui utilisé pour déposer une couche de teneur 20% en régime basse puissance.

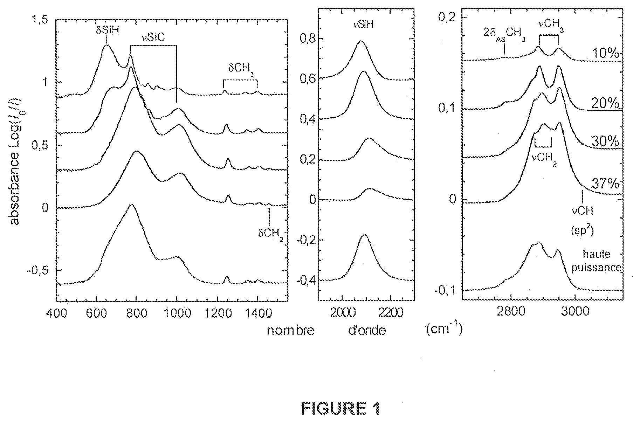

Les spectres infrarouge correspondants sont présentés sur la figure 1 : La teneur en carbone x est indiquée sur chaque courbe. La courbe en bas de figure représente le spectre de la couche déposée en régime de forte puissance.

Dans ce dernier cas, on note la plus forte proportion en carbone de type CH₂ et insaturé (=CH_{z}, indiqué sp²), en comparaison avec la courbe correspondante déposée en régime de basse puissance. Les spectres ont été enregistrés en lumière non polarisée et avec un angle d'incidence de 45°, et l'absorbance a été ramenée à une épaisseur de couche de 1 micron.

### 3- Constitution des cellules

Les expériences de test sont faites dans des cellules silicium-lithium, préparées en boîte à gants, puis placées dans des boîtiers étanches.

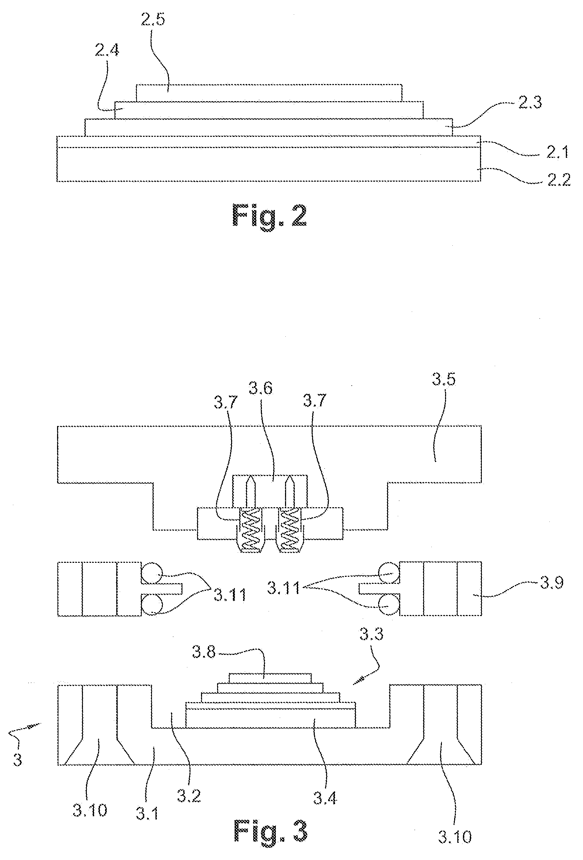

La partie active de la cellule est une structure empilée représentée sur la figure 2 et composée :
- d'une couche (2.1) du matériau à étudier (silicium amorphe méthylé) déposée sur un substrat (2.2) en acier inoxydable d'1 mm d'épaisseur et d'environ 2 cm².
- d'un séparateur (2.3) composé d'une feuille de fibre de verre d'environ 0,5 mm d'épaisseur et sensiblement de la même taille que le substrat en acier inoxydable, imbibée d'une solution d'électrolyte, par exemple une solution concentrée à 1 mol/L de LiClO₄ dans du carbonate de propylène (PC).
- d'une feuille de lithium (2.4) de 300 µm d'épaisseur et de même taille que le séparateur.
- d'un collecteur (2.5) en cuivre d'épaisseur 100 µm.

Le boîtier étanche (3) est composé de trois parties principales représentées sur la figure 3 :
- une pièce inférieure (3.1) en acier inoxydable, comprenant un réceptacle circulaire (3.2) pouvant contenir la partie active de la cellule (3.3). Cette pièce inférieure est en contact direct avec le substrat (3.4) en acier inoxydable de la cellule, permettant un bon contact électrique avec cette électrode.
- un couvercle (3.5) en acier inoxydable, dans lequel est fixée une pièce (3.6) comprenant quatre picots (3.7) rétractables en laiton, assurant le contact électrique avec le collecteur (3.8) en cuivre de la cellule
- une rondelle (3.9) intermédiaire en polytrifluorochloroéthylène (Kel'F), assurant l'isolation électrique entre les deux parties en acier inoxydable du boîtier.

Les deux parties (3.1) et (3.5) en acier inoxydable sont fixées par quatre vis (3.10) à la rondelle (3.9) en Kel'F, ces vis ne traversant pas la rondelle, et ne faisant donc pas contact avec la pièce en acier inoxydable en vis-à-vis.

Deux joints (3.11) en fluoroélastomère (viton) assurent l'étanchéité du boîtier (3), respectivement entre la rondelle (3.9) en Kel'F et la partie inférieure (3.1) du boîtier, et entre la rondelle (3.9) et le couvercle (3.5).

### 4- Préparation des cellules

- Le silicium amorphe méthylé, déposé comme décrit précédemment au §1, est utilisé sans traitement particulier après dépôt.
- Les cellules sont préparées dans une boîte à gants, dont la teneur en eau est d'environ 100 ppm. Les différents éléments de la cellule sont séchés sous vide, à température ordinaire, dans le sas de la boîte à gants, pendant une vingtaine d'heures.

### 5- Paramètres caractéristiques des couches de matériaux : épaisseur, teneur en carbone, courant de charge-décharge

Les matériaux actifs des cellules sont testés pour différentes épaisseurs et différentes teneurs en carbone.
- épaisseurs testées :

Des couches minces (de 30 à 70 nm) ou épaisses (290 nm), de silicium amorphe (0% de carbone) ou de silicium amorphe méthylé, déposées sur acier inoxydable.
- teneurs en carbone testées :
   0, 10, 15, 20, 25, 33 % de carbone

Différents courants de charge/décharge ont été utilisés pour cycler les cellules. Conformément à l'usage, ces courants de charge/décharge sont indiqués dans une unité normalisée en fonction de la capacité réversible initiale de la cellule : un courant de C/2 correspond à une charge/décharge de la cellule en deux heures, un courant de C/10 correspond à une charge/décharge de la cellule en dix heures, etc. Les courants employés sont rapportés sur le tableau 1.

**Tableau 1 : courants de charge/décharge**

| | | |
|---|---|---|
| épaisseur | 30-70 nm | 290 nm |
| % carbone | | |
| 0 | C/10 - C/1,5 | |
| 10 | C/10 - C/1,5 | |
| 15 | C/10 - C/1,5 | |
| 20 | C/1,5 - C/0,5 | C/10 |
| 25 | C/10 - C/1,5 | |
| 33 | C/10 - C/1,5 | |

Les cellules ont toutes été cyclées à température ordinaire (20-25°C)

### 6- Résultats des cyclages

### a) Comportement des cellules en cyclage

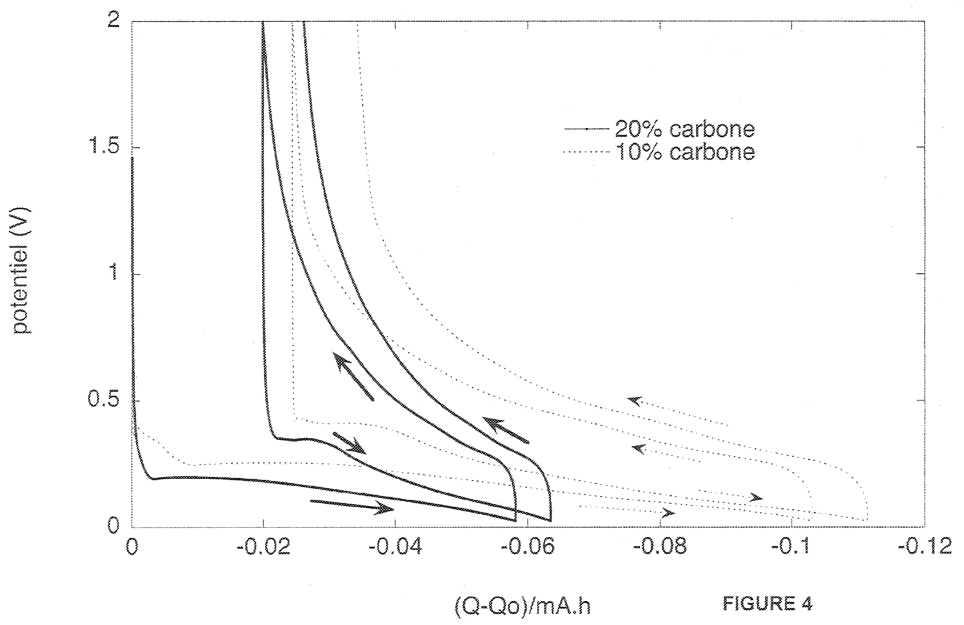

La figure 4 montre l'évolution du potentiel au cours des deux premiers cycles de deux cellules d'épaisseurs 65 nm et 50 nm, pour du silicium amorphe méthylé contenant 10% de carbone, et 20% de carbone respectivement, cyclées à C/10, en fonction de la charge fournie à l'électrode. La contre-électrode est une électrode en lithium métallique, de telle façon que le potentiel est toujours positif, et l'état chargé correspond à un potentiel voisin de zéro.

Cette figure met en évidence des capacités irréversibles de 25% de la capacité de première charge pour le silicium amorphe méthylé contenant 10% de carbone, et de 34% pour le silicium amorphe méthylé contenant 20% de carbone. Les flèches indiquent le sens de variation du potentiel.

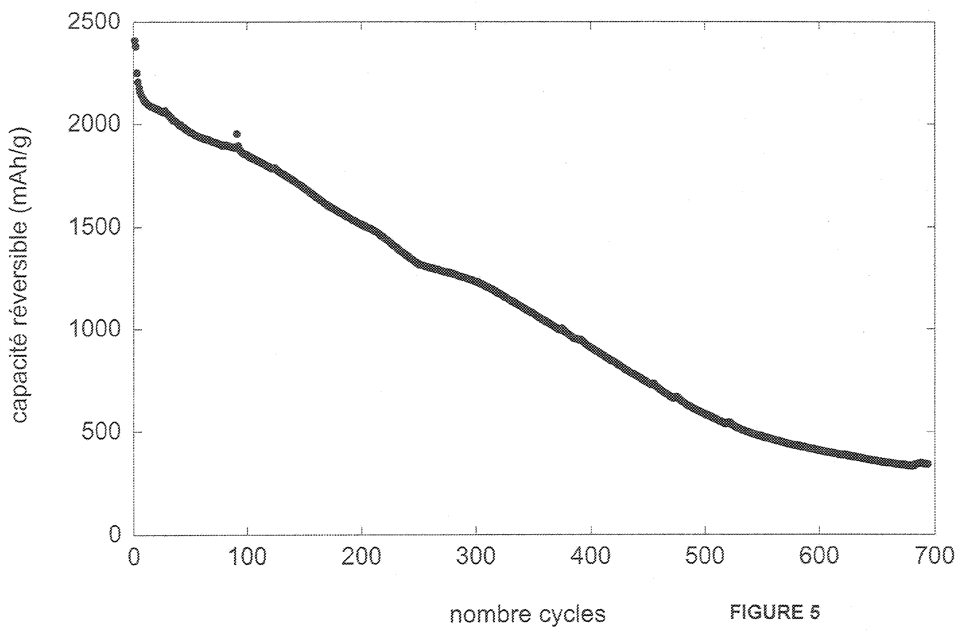

La figure 5 montre l'évolution de la capacité massique d'une cellule avec une électrode en silicium amorphe méthylé contenant 15% de carbone, pour une épaisseur de 60 nm, cyclée à C/1,5.

### b) Effet de la teneur en carbone

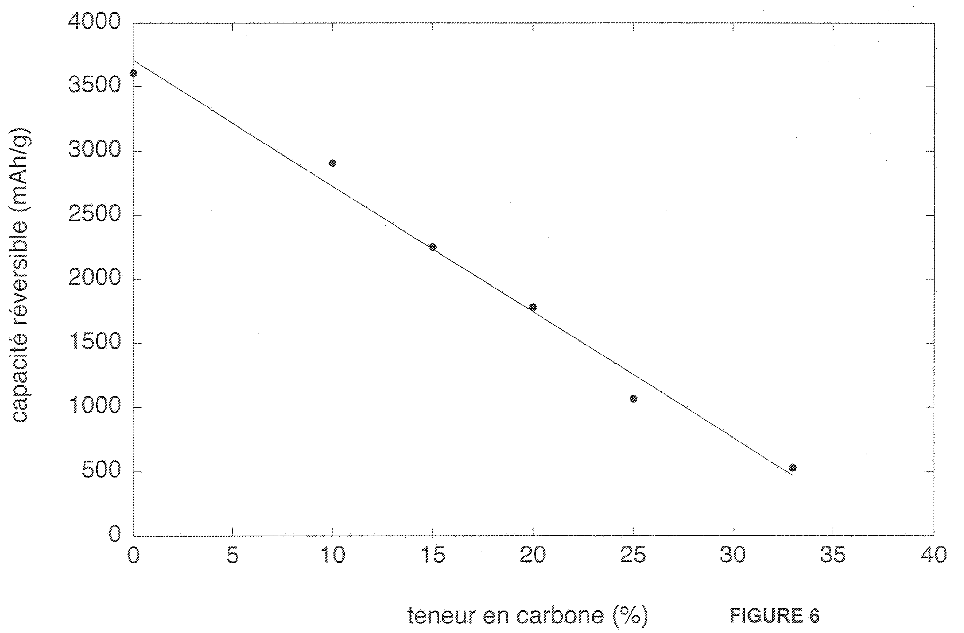

La figure 6 montre la variation de la capacité massique réversible initiale mesurée en fonction de la teneur en carbone.

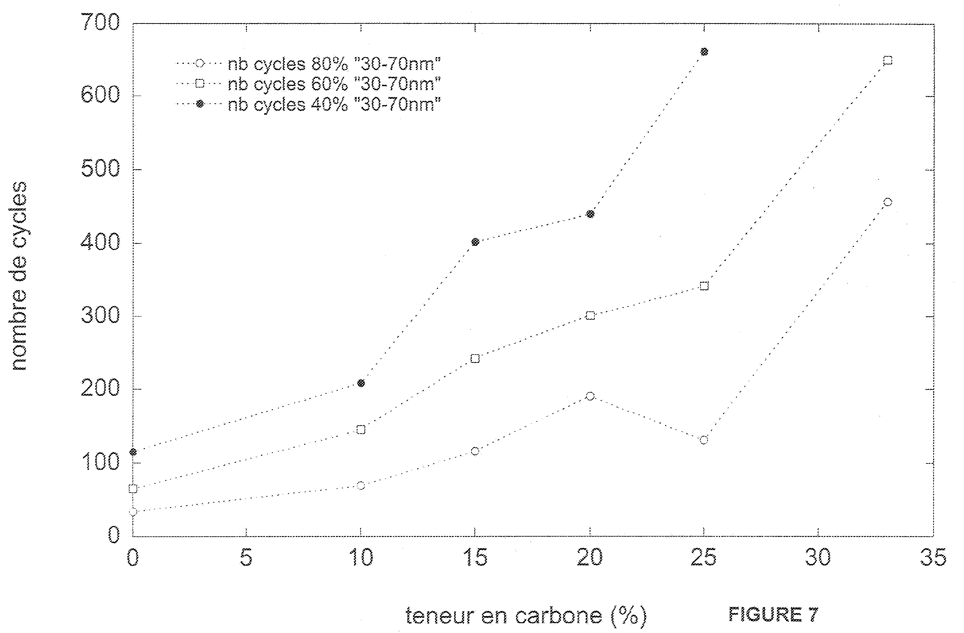

La figure 7 montre le nombre de cycles au bout duquel la capacité est réduite à 80%, 60% et à 40% de la capacité initiale, en fonction de la teneur en carbone, pour des couches d'épaisseurs 30-70 nm. Ces nombres de cycles augmentent fortement en fonction de la teneur en carbone.

### c) Effet de l'épaisseur

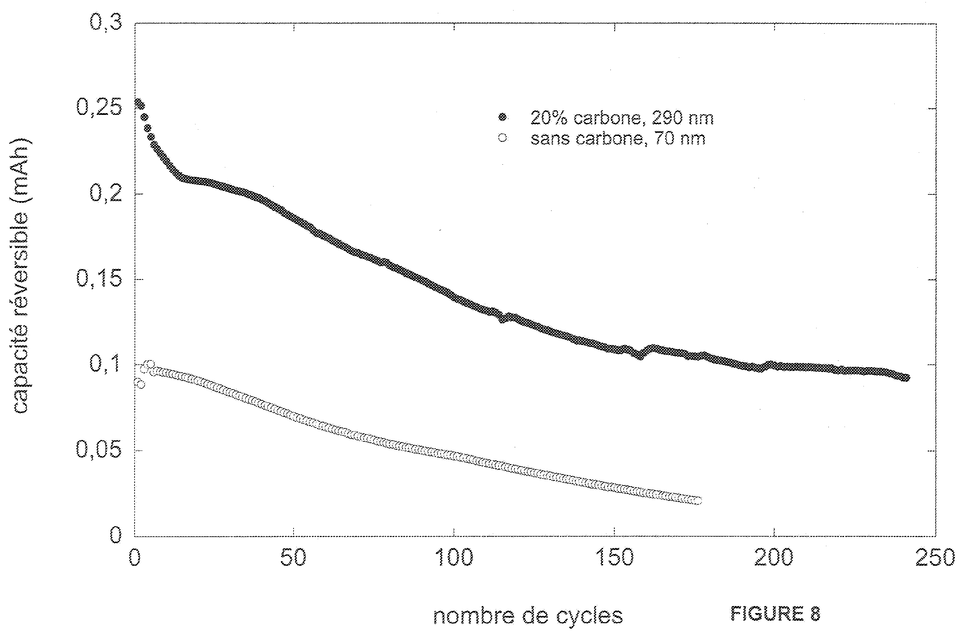

La figure 8 compare les variations de capacité réversible de deux cellules : l'une avec une électrode d'épaisseur 70 nm en silicium amorphe pur (sans carbone), l'autre avec une électrode d'épaisseur 290 nm en silicium amorphe méthylé contenant 20% de carbone : malgré une capacité massique plus faible, la couche épaisse avec 20% de carbone montre une meilleure capacité totale (et surfacique) que la couche mince sans carbone. Son évolution avec le nombre de cycles montre aussi une dégradation moins rapide de la capacité. La capacité réversible de la cellule épaisse atteint un maximum au bout de quelques cycles. Cette période de « formage » n'est pas représentée ici.

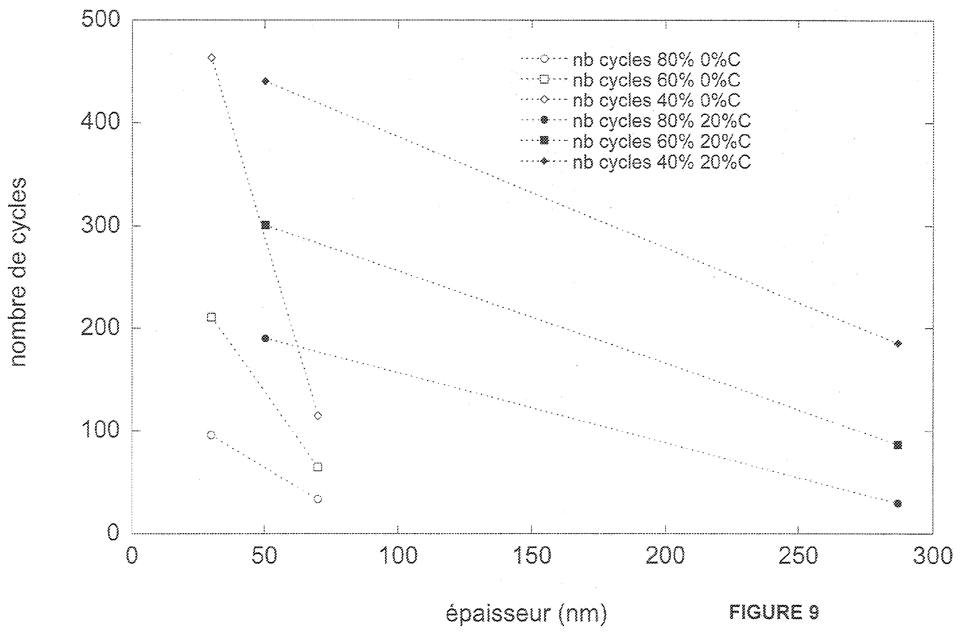

La figure 9 illustre les durées au bout desquelles les capacités des cellules sont réduites à 80%, 60%, et 40% pour des cellules en silicium amorphe pur (sans carbone), d'épaisseurs 30 et 70 nm, et avec 20% de carbone, d'épaisseurs 50 et 290 nm.

La capacité des cellules avec une électrode en silicium amorphe méthylé se dégrade moins en fonction de l'épaisseur que celle des cellules sans carbone. Les cellules d'épaisseur 290 nm avec une électrode en silicium amorphe méthylé contenant 20% de carbone ont une capacité surfacique plus grande, et une meilleure cyclabilité que les cellules sans carbone d'épaisseur 70 nm.

### d) Fortes vitesses de charge/décharge

Le matériau soutient bien de fortes vitesses de charge-décharge. Une cellule d'épaisseur 50 nm avec une couche en silicium amorphe méthylé de 20% de teneur en carbone, a été cyclée à C/0,5. Les nombres de cycles au bout desquels sa capacité résiduelle a été réduite à 80, 60 et 40 % étaient respectivement :
80% C initial : 60 cycles
60% C initial : 480 cycles
40% C initial : 1200 cycles

La capacité chute plus rapidement à 80% de la capacité initiale que pour une vitesse de charge-décharge plus lente. Au-delà de cette diminution initiale, les chiffres sont du même ordre, voire un peu meilleurs que ceux obtenus pour des cyclages moins rapides.

Enfin l'efficacité coulombienne est particulièrement élevée pour cette forte vitesse de charge décharge : supérieure à 90% dès le 3ème cycle, 95% dès le 4ème cycle et tendant de 99 à 99,8% au delà du 60ème cycle.

## Revendications

1. Utilisation de silicium amorphe méthylé comme matière active pour la fabrication d'une électrode.

2. Utilisation selon la revendication 1 pour la fabrication d'une anode pour batterie Li-ion.

3. Electrode comprenant au moins un substrat en un matériau conducteur dans lequel les ions lithium ne s'insèrent pas ou peu, sur lequel est déposé un revêtement comportant au moins un matériau à base de silicium amorphe méthylé.

4. Electrode selon la revendication 3, dans laquelle le silicium amorphe méthylé répond à la formule chimique (II) :
a-Si₁₋ₓ(CH₃)_{x-y}(CH₂)_{y} : H avec 0 < x ≤ 0,4 et y ≤ x (II)

5. Electrode selon la revendication 4, dans laquelle le silicium amorphe méthylé répond à la formule chimique (I) :
a-Si₁₋ₓ(CH₃)ₓ : H avec 0 < x ≤ 0,4 (I)

6. Electrode selon l'une quelconque des revendications 3 à 5, dans laquelle le matériau à base de silicium amorphe méthylé comprend 50 à 100% de silicium amorphe méthylé en fraction massique.

7. Electrode selon l'une quelconque des revendications 3 à 6, dans laquelle le revêtement à base de silicium amorphe méthylé est sous forme d'une couche mince continue.

8. Electrode selon l'une quelconque des revendications 3 à 7, dans laquelle le substrat comporte au moins une couche à base d'un métal ou d'un alliage de métaux choisi parmi : le cuivre, le nickel, le fer, l'acier inoxydable (INOX), le molybdène ou le tungstène.

9. Electrode selon la revendication 8, dans laquelle le matériau à base de silicium amorphe méthylé est déposé directement sur le substrat comportant une couche à base de métal ou d'alliage de métaux, en particulier sur un film métallique.

10. Electrode selon l'une quelconque des revendications 3 à 9, dans laquelle le substrat présente une surface spécifique supérieure à sa surface géométrique.

11. Electrode selon l'une quelconque des revendications 3 à 10, dans laquelle le silicium amorphe méthylé est dopé par l'inclusion d'atomes choisis parmi des atomes de phosphore, de bore, d'arsenic, d'antimoine, d'aluminium, de gallium, d'indium, de bismuth.

12. Electrode selon l'une quelconque des revendications 3 à 11, dans laquelle, si l'on désigne par α le quotient de la concentration d'atomes de carbone [C], rapporté à la somme des concentrations atomiques [C] et [Si] dans le matériau (SM) : $α = \frac{\left[C\right]}{\left[C\right] + \left[Si\right]}$ $5 % \leq α \leq 40 % .$

13. Electrode selon la revendication 7, dans laquelle la couche de silicium amorphe méthylé, ou la superposition de couches de silicium amorphe méthylé, présente une épaisseur supérieure ou égale à 30 nm, avantageusement supérieure ou égale à 100 nm, encore mieux, supérieure ou égale à 500 nm.

14. Electrode selon la revendication 7, dans laquelle la couche de silicium amorphe méthylé, ou la superposition de couches de silicium amorphe méthylé, présente une épaisseur allant jusqu'à 10 µm.

15. Accumulateur au lithium comprenant une anode selon l'une quelconque des revendications 3 à 14.

16. Procédé de fabrication d'une électrode selon l'une quelconque des revendications 3 à 15 comportant au moins les étapes suivantes :
fourniture d'un substrat en un matériau conducteur dans lequel les ions lithium ne s'insèrent pas ou peu
dépôt de la couche à base de silicium amorphe méthylé sur le substrat par PECVD à basse puissance.

17. Procédé selon la revendication 16 dans lequel :
la température du substrat est comprise entre 100°C et 350°C, de préférence entre 150 et 320°C, avantageusement entre 180 et 280°C,
la puissance est inférieure à 0,3 W/cm², de préférence inférieure à 0,25 W/cm², avantageusement comprise entre 0,03 et 0,15 W/cm²,
le flux gazeux de silane est compris entre 0,02 et 100 cm³/mn dans les conditions standard, de préférence entre 0,1 et 50 cm³/mn dans les conditions standard, avantageusement entre 0,5 et 30 cm³/mn dans les conditions standard,
le flux gazeux de méthane est compris entre 1 et 200 cm³/mn dans les conditions standard, de préférence entre 2 et 100 cm³/mn dans les conditions standard, avantageusement entre 4 et 50 cm³/mn dans les conditions standard.

## Patentansprüche

1. Verwendung von methyliertem amorphem Silicium als aktives Material zur Herstellung einer Elektrode.

2. Verwendung nach Anspruch 1 zur Herstellung einer Anode für Li-Ionen-Batterien.

3. Elektrode, umfassend mindestens ein Substrat aus einem leitenden Material, in das sich die Lithium-Ionen nicht oder nur geringfügig einbauen, auf dem eine Schicht abgeschieden ist, die mindestens ein Material auf Basis von methyliertem amorphem Silicium umfasst.

4. Elektrode nach Anspruch 3, wobei das methylierte amorphe Silicium der chemischen Formel (II) entspricht:
a-Si₁₋ₓ(CH₃)_{x-y}(CH₂)_{y}: H mit 0 < x ≤ 0,4 und y ≤ x (II)

5. Elektrode nach Anspruch 4, wobei das methylierte amorphe Silicium der chemischen Formel (I) entspricht:
a-Si₁₋ₓ(CH₃)ₓ: H mit 0 < x ≤ 0,4 (I)

6. Elektrode nach einem der Ansprüche 3 bis 5, wobei das Material auf Basis von methyliertem amorphem Silicium 50 bis 100 % methyliertes amorphes Silicium in Massenanteilen umfasst.

7. Elektrode nach einem der Ansprüche 3 bis 6, wobei die Schicht auf Basis von methyliertem amorphem Silicium in Form einer kontinuierlichen Dünnschicht vorliegt.

8. Elektrode nach einem der Ansprüche 3 bis 7, wobei das Substrat mindestens eine Schicht auf Basis eines Metalls oder einer Legierung von Metallen umfasst, ausgewählt aus: Kupfer, Nickel, Eisen, rostfreiem Stahl (INOX), Molybdän oder Wolfram.

9. Elektrode nach Anspruch 8, wobei das Material auf Basis von methyliertem amorphem Silicium direkt auf dem Substrat abgeschieden ist, das eine Schicht auf Basis von Metall oder einer Metalllegierung umfasst, insbesondere auf einem Metallfilm.

10. Elektrode nach einem der Ansprüche 3 bis 9, wobei das Substrat eine größere spezifische Oberfläche als seine geometrische Oberfläche aufweist.

11. Elektrode nach einem der Ansprüche 3 bis 10, wobei das methylierte amorphe Silicium durch Einschluss von Atomen dotiert ist, die ausgewählt sind aus Phosphor-, Bor-, Arsen-, Antimon-, Aluminium-, Gallium-, Indium- und Wismutatomen.

12. Elektrode nach einem der Ansprüche 3 bis 11, wobei, wenn α den Quotienten der Konzentration von Kohlenstoffatomen [C] bezogen auf die Summe der Atomkonzentrationen [C] und [Si] in dem Material (SM) bezeichnet: $α = \frac{\left[C\right]}{\left[C\right] + \left[Si\right]}$ $5 % \leq α \leq 40 % .$

13. Elektrode nach Anspruch 7, wobei die Schicht aus methyliertem amorphem Silicium oder die Übereinanderlagerung von Schichten aus methyliertem amorphem Silicium eine Dicke von größer oder gleich 30 nm, vorteilhaft größer oder gleich 100 nm, noch besser größer oder gleich 500 nm, aufweist.

14. Elektrode nach Anspruch 7, wobei die Schicht aus methyliertem amorphem Silicium oder die Übereinanderlagerung von Schichten aus methyliertem amorphem Silicium eine Dicke von bis zu 10 µm aufweist.

15. Lithiumakkumulator, umfassend eine Anode nach einem der Ansprüche 3 bis 14.

16. Verfahren zur Herstellung einer Elektrode nach einem der Ansprüche 3 bis 15, umfassend mindestens die folgenden Schritte:
Bereitstellen eines Substrats aus einem leitenden Material, in das sich die Lithium-Ionen nicht oder nur geringfügig einbauen;
Abscheiden der Schicht auf Basis von methyliertem amorphem Silicium auf dem Substrat durch PECVD mit geringer Leistung.

17. Verfahren nach Anspruch 16, wobei:
die Temperatur des Substrates zwischen 100 °C und 350 °C, vorzugsweise zwischen 150 und 320 °C, vorteilhaft zwischen 180 und 280 °C liegt,
die Leistung unter 0,3 W/cm², vorzugsweise niedriger als 0,25 W/cm² ist, und vorteilhaft zwischen 0,03 und 0,15 W/cm² liegt,
der Silan-Gasfluss zwischen 0,02 und 100 cm³/min unter Standardbedingungen, vorzugsweise zwischen 0,1 und 50 cm³/min unter Standardbedingungen, vorteilhaft zwischen 0,5 und 30 cm³/min unter Standardbedingungen liegt,
der Methan-Gasfluss zwischen 1 und 200 cm³/min unter Standardbedingungen, vorzugsweise zwischen 2 und 100 cm³/min unter Standardbedingungen, vorteilhaft zwischen 4 und 50 cm³/min unter Standardbedingungen liegt.

## Claims

1. The use of methylated amorphous silicon as an active material for manufacturing an electrode.

2. The use according to claim 1 for manufacturing a Li-ion battery anode.

3. An electrode comprising at least one substrate made of a conductive material in which little or no lithium ions fit, on which a coating comprising at least one material based on methylated amorphous silicon is deposited.

4. The electrode according to claim 3, in which the methylated amorphous silicon has the chemical formula (II):
a-Si₁₋ₓ(CH₃)_{x-y}(CH₂)_{y} : H where 0 < x ≤ 0.4 and y ≤ x (II)

5. The electrode according to claim 4, in which the methylated amorphous silicon coznplies with chemical formula (I):
a-Si₁₋ₓ(CH₃)ₓ : H where 0 < x ≤ 0.4 (I)

6. The Electrode according to anyone of claims 3 to 5, in which the material based on methylated amorphous silicon comprises 50 to 100% methylated amorphous silicon as a mass fraction.

7. The electrode according to anyone of claims 3 to 6, in which the coating based on methylated amorphous silicon is in the form of a continuous thin layer.

8. The electrode according to any of claims 3 to 7, in which the substrate comprises at least one layer based on a metal or a metal alloy chosen from: copper, nickel, iron, stainless steel (SS), molybdenum or tungsten.

9. The electrode according to claim 8, in which the material based on methylated amorphous silicon is deposited directly onto the substrate comprising a layer based on metal or metal alloy, in particular on to a metal film.

10. The electrode according to anyone of claims 3 to 9, in which the substrate has a specific surface area greater than its geometric surface area.

11. The electrode according to anyone of claims 3 to 10, in which the methylated amorphous silicon is doped by the inclusion of atoms chosen from phosphorus, boron, arsenic, antimony, aluminium, gallium, indium, bismuth atoms.

12. The electrode according to anyone of claims 3 to 11, wherein, if α is used to denote the quotient of the concentration of the carbon atoms [C], with reference to the sum of the atomic concentrations [C] and [Si] in the material (SM): $α = \frac{\left[C\right]}{\left[C\right] + \left[Si\right]}$ $5 % \leq α \leq 40 % .$

13. The electrode according to claim 7, in which the methylated amorphous silicon layer, or the overlay of methylated amorphous silicon layers, has a thickness greater than or equal to 30 nm, advantageously greater than or equal to 100 nm, preferably, greater than or equal to 500 nm.

14. The electrode according to claim 7, in which the methylated amorphous silicon layer, or the overlay of methylated amorphous silicon layers, has a thickness of up to 10 µm.

15. A lithium storage battery comprising an anode according to any of claims 3 to 14.

16. A method for manufacturing an electrode according to anyone of claims 3 to 15 comprising at least the following steps:
providing a substrate made of a conductive material wherein little or no lithium ions fit
depositing the layer based on methylated amorphous silicon on the substrate by means of low-power PECVD.

17. The method according to claim 16 wherein:
the temperature of the substrate is comprised between 100°C and 350°, preferably between 150 and 320°C, advantageously between 180 and 280°C,
the power is less than 0.3 W/cm², preferably less than 0.25 W/cm², advantageously between 0.03 and 0.15 W/cm²,
the silane gas flow is comprised between 0.02 and 100 cm³/min under standard conditions, preferably between 0.1 and 50 cm³/min under standard conditions, advantageously between 0.5 and 30 cm³/min under standard conditions,
the methane gas flow is comprised between 1 and 200 cm³/min under standard conditions, preferably between 2 and 100 cm³/min under standard conditions, advantageously between 4 and 50 cm³/min under standard conditions.
